# EUROPEAN PATENT APPLICATION

(11) **EP 4 495 335 A1**
(43) Date of publication of application: **22.01.2025**
(21) Application number: 24181988.7
(22) Date of filing: 13.06.2024
(51) Int. Cl.: E02F 9/08

(54) **WORKING MACHINE**

(30) Priority: 30.06.2023 JP 2023107901
(71) Applicant: KUBOTA CORPORATION, Osaka-shi, Osaka 556-8601 (JP)
(72) Inventor: MIURA, Takashi, SAKAI-SHI, OSAKA, 5900908 (JP); FUJIWARA, Junichi, SAKAI-SHI, OSAKA, 5900908 (JP)
(74) Representative: Cabinet Beau de Loménie

(57) **Abstract**

A working machine includes a machine body (2); a prime mover (21) mounted on the machine body (2); a cooling fan (33) to generate cooling air (F1) for cooling the prime mover (21); a cooler (23) having a ventilation surface portion (23F) on which the cooling air (F1) hits, to cool a coolant to be circulated and supplied to the prime mover (21); and a controller (28). The cooler (23) and the controller (28) are disposed upstream of the prime mover (21) in a flow direction of the cooling air (F1). The controller (28) is disposed at a position not overlapping the ventilation surface portion (23F) when viewed in the flow direction of the cooling air (F1).

## Description

### BACKGROUND OF THE INVENTION

### Field of the Invention

The present invention relates to a working machine such as a backhoe.

### Description of the Related Art

In a working machine disclosed in Japanese Unexamined Patent Application Publication No. 2021-4488, a control unit (controller) that controls an action of the working machine is disposed at a position near the front and inside a cover body covering a machine body, that is, at a position near the front and beside a prime mover.

### SUMMARY OF THE INVENTION

Meanwhile, the inside of a machine body is likely to be at a high temperature with heat of a prime mover. In particular, an appropriate measure against heat is desired for a controller that controls an action of a working machine even though the controller is provided at a position separated from the prime mover similarly to the above-described working machine of the related art. As a measure for preventing an increase in temperature of the controller, for example, it is conceivable to dispose the controller so as to face a ventilation surface portion of a radiator, thereby causing cooling air for cooling the radiator to hit the controller. However, when the controller is disposed to face the ventilation surface portion of the radiator, the flow of the cooling air to the radiator is partially blocked, and cooling efficiency of the radiator may be reduced.

The present invention is made to solve such a problem, and an object of the present invention is to provide a working machine capable of efficiently cooling a cooler and a controller.

The following is a technical solution employed by the present invention to attain the obj ect.

A working machine according to the present invention includes a machine body, a prime mover mounted on the machine body, a cooling fan to generate cooling air for cooling the prime mover, a cooler having a ventilation surface portion on which the cooling air hits, to cool a coolant to be circulated and supplied to the prime mover, and a controller. The cooler and the controller are disposed upstream of the prime mover in a flow direction of the cooling air, and the controller is disposed at a position not overlapping the ventilation surface portion when viewed in the flow direction.

The controller may be disposed below the cooler.

The working machine may include a shielding plate to provide partition between a prime mover chamber in which the prime mover is disposed and a space in which the controller is disposed. The controller may be disposed at a position facing a surface of the shielding plate opposite to the prime mover chamber.

The working machine may include a heat insulating member to cover a surface of the shielding plate near the prime mover chamber.

The working machine may include a battery to supply electric power to an electrical component including the controller mounted on the working machine, and the battery may be disposed at a position facing the controller with a first space, through which the cooling air F 1 is able to flow, interposed therebetween.

The battery may be disposed above a bottom portion base plate of the machine body with a second space, through which the cooling air is able to flow, interposed with respect to the bottom portion base plate, and the second space may communicate with the first space in a downstream area of the second space in the flow direction of the cooling air.

A cover body defining an outer shell of the machine body may include a first outside air inlet provided at a position overlapping the ventilation surface portion when viewed in the flow direction, and a second outside air inlet provided lower than the first outside air inlet to cause the second space to communicate with an external space of the cover body.

The working machine may include a battery bracket attached to the bottom portion base plate, to support the battery. The battery bracket may include a base plate to support the battery from below, and the second space may be defined by the base plate and the bottom portion base plate.

The base plate may have a first communication opening to allow the cooling air to flow from the second space to the first space.

The working machine may include an intermediate frame to support the cooler from below. The intermediate frame has a second communication opening to allow the cooling air to flow from the first space to a space in which the cooler is disposed.

The second communication opening may be provided above the controller.

According to the working machine, both the cooler and the controller can be efficiently cooled with the cooling air before cooling the prime mover.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a left side view of a working machine.
FIG. 2 is a left rear perspective view of the working machine.
FIG. 3 is a left rear perspective view of a machine body in a state in which some cover bodies are separated.
FIG. 4 is a left rear perspective view illustrating an internal structure of the machine body.
FIG. 5 is a rear view illustrating the internal structure of the machine body.
FIG. 6 is a left rear perspective view of a bottom portion base plate and a support frame.
FIG. 7 is a perspective view around a cooler.
FIG. 8 is a perspective view around a cooling fan.
FIG. 9 is a partially exploded perspective view of a controller and its surroundings.
FIG. 10 is a left side view of a battery bracket and its surroundings.
FIG. 11 is a partially exploded perspective view of the battery bracket and its surroundings.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, embodiments of the present invention will be described with reference to the drawings.

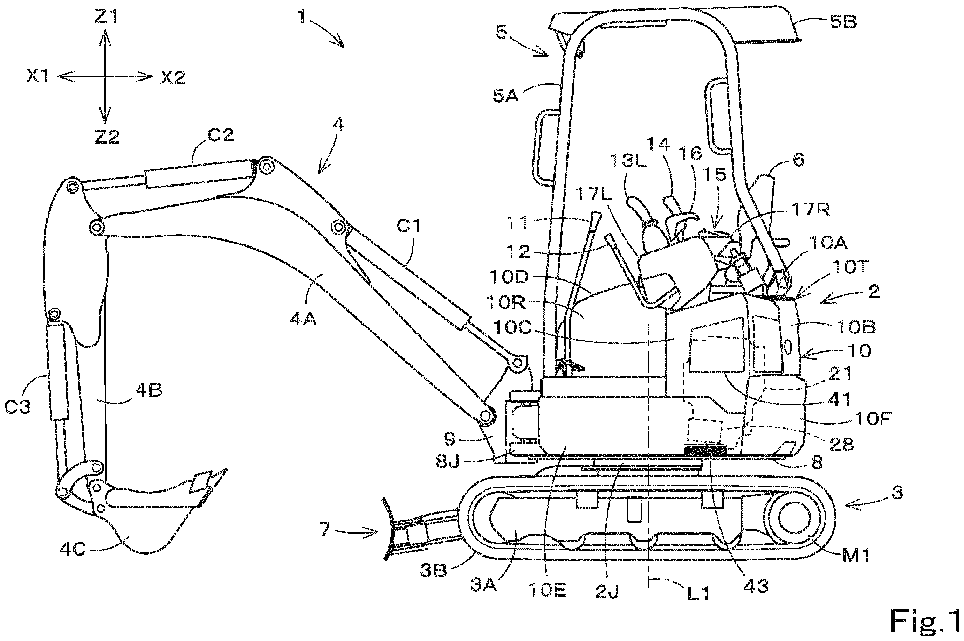

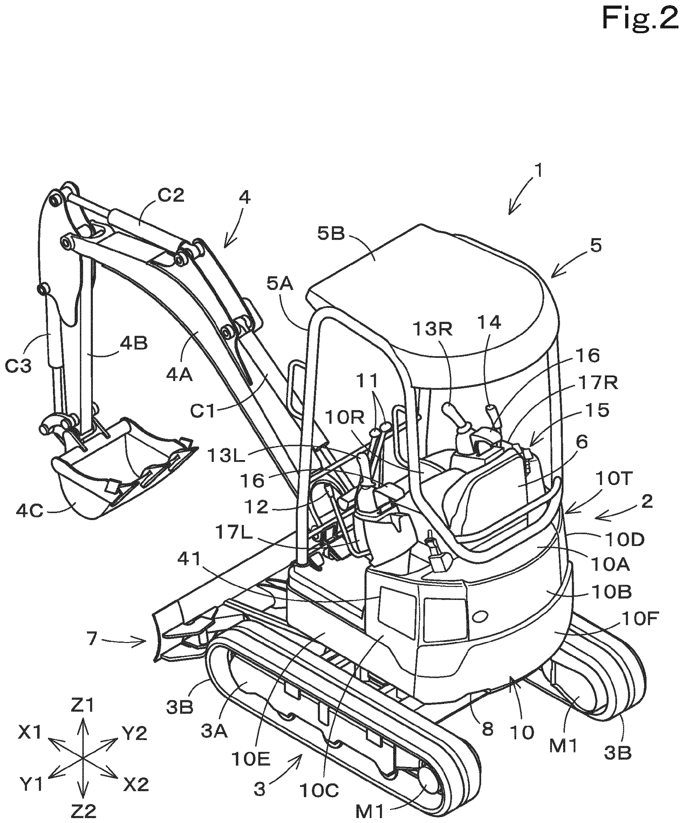

As illustrated in FIGS. 1 and 2, a working machine 1 of the present embodiment is a backhoe including a machine body (turning base) 2, a traveling device 3, and a working device 4. A canopy 5 is mounted on the machine body 2. An operator's seat 6 on which an operator is seated is provided inside the canopy 5. The canopy 5 is a protection mechanism that protects the operator's seat 6, and includes a ROPS 5A and a roof 5B. Note that the working machine 1 is not limited to the backhoe, and may be another type of working machine. Also, instead of the canopy 5, a cabin surrounding the operator's seat 6 may be mounted on the machine body 2, as a protection mechanism that protects the operator's seat 6.

In the present embodiment, a direction in which the operator seated on the operator's seat 6 faces (a direction of arrow X1 in FIGS. 1 and 2) is referred to as a forward side of the machine body 2, and a direction opposite thereto (a direction of arrow X2 in FIGS. 1 and 2) is referred to as a rearward side of the machine body 2. Also, the left of the operator (a direction of arrow Y1 in FIG. 2) is referred to as a leftward side of the machine body 2, and a direction opposite thereto (a direction of arrow Y2 in FIG. 2) is referred to as a rightward side of the machine body 2. Further, the upper side of the operator (a direction of arrow Z1 in FIGS. 1 and 2) is referred to as an upward side of the machine body 2, and a direction opposite thereto (a direction of arrow Z2 in FIGS. 1 and 2) is referred to as a downward side of the machine body 2.

The traveling device 3 is a crawler type traveling device that supports the machine body 2 so as to be capable of traveling, and includes a traveling frame 3A and at least one traveling mechanism 3B. The traveling frame (track frame) 3A is a structure body to which the traveling mechanism 3B is attached on each of the left and right and that supports the machine body 2 from below. The traveling mechanism 3B is, for example, a crawler. The traveling mechanism 3B is driven by a traveling motor M1 provided in the traveling frame 3A. Note that the traveling device 3 is not limited to of the crawler type, and may be of a wheel type.

The traveling device 3 includes a dozer device 7. The dozer device 7 is provided at a front portion of the traveling frame 3A. The dozer device 7 is coupled to a dozer cylinder (hydraulic cylinder) provided in the traveling frame 3A, and is raised/lowered by the dozer cylinder being extended/contracted.

The working device 4 includes a boom 4A, an arm 4B, and a bucket 4C. Note that, instead of or in addition to the bucket 4C, another working tool (hydraulic attachment) that can be driven with a hydraulic fluid can be attached to the working machine 1. Examples of the other working tool include a hydraulic breaker, a hydraulic crusher, an angle broom, an earth auger, a pallet fork, a sweeper, a mower, and a snow blower.

The boom 4A is pivotally attached to a swing bracket 9 provided at a front portion of the machine body 2 so as to be swingable about a horizontal axis (an axis extending in the left-right direction). The boom 4A is coupled to the swing bracket 9 via a boom cylinder (hydraulic cylinder) C1, and is swung about the horizontal axis by the boom cylinder C1 being extended/contracted. Note that the swinging of the boom 4A is an action of raising the boom 4A upward in front of the machine body 2 or tilting the boom 4A forward of the machine body 2.

The arm 4B is pivotally attached to a distal end portion of the boom 4A so as to be swingable about a horizontal axis (an axis extending in the left-right direction). The arm 4B is coupled to the boom 4A via an arm cylinder (hydraulic cylinder) C2, and is swung about the horizontal axis by the arm cylinder C2 being extended/contracted. Note that the swinging of the arm 4B is an action of moving a distal end of the arm 4B toward the machine body 2 (crowding) or away from the machine body 2 (dumping).

The bucket 4C is pivotally attached to a distal end portion of the arm 4B so as to be swingable about a horizontal axis (an axis extending in the left-right direction). The bucket 4C is coupled to the arm 4B via a bucket cylinder (hydraulic cylinder) C3, and is swung about the horizontal axis by the bucket cylinder C3 being extended/contracted. Note that the swinging of the bucket 4C is an action of moving a distal end of the bucket 4C toward the machine body 2 (crowding) or away from the machine body 2 (dumping), and is, for example, an action of shoveling earth and sand or the like with the bucket 4C or dropping (discharging) the shoveled earth and sand or the like from the bucket 4C.

As illustrated in FIG. 1, the machine body 2 includes a turning base plate (bottom portion base plate) 8 defining a bottom portion of the machine body 2. The turning base plate 8 is formed of a thick plate material, and is supported on an upper portion of the traveling device 3 via a turning bearing 2J. That is, the machine body 2 is supported so as to be rotatable about a turning axis L1 of the turning bearing 2J relative to the traveling device 3. The turning axis L1 is the center of rotation of the turning bearing 2J. The turning base plate 8 is driven to turn about the turning axis L1 by a turning motor provided in the traveling device 3.

A support bracket 8J that supports the working device 4 is provided at a front portion of the turning base plate 8. The support bracket 8J is provided to protrude forward from the front portion of the machine body 2, and the swing bracket 9 is connected to a distal end portion of the support bracket 8J. The swing bracket 9 is pivotally attached to the distal end portion of the support bracket 8J so as to be swingable about a vertical axis (an axis extending in the up-down direction). The swing bracket 9 is coupled to a swing cylinder (hydraulic cylinder) provided in the machine body 2, and is swung about the vertical axis by the swing cylinder being extended/contracted.

As illustrated in FIGS. 1 to 3, a weight 10F is provided on a rear portion of the turning base plate 8. The weight 10F is a member for balancing the weight with the working device 4, and is disposed in a rear portion of the machine body 2. The weight 10F is formed in a substantially arc shape and is provided so as to cover the inside of the machine body 2 from the rear. That is, the weight 10F defines a portion of an outer cover (cover body) 10 defining an outer shell of the machine body 2.

In addition to the operator's seat 6, a traveling lever 11, an operation lock lever (unload lever) 12, manipulating levers 13L and 13R, a dozer lever 14, at least one operation switch 15, and at least one armrest 16 are provided in an upper portion of the machine body 2. The traveling lever 11 is an operation member for operating the traveling device 3, and is provided forward of the operator's seat 6. The operation lock lever 12 is an operation member for switching a hydraulic actuator mounted on the working machine 1 between an operable state and an inoperable state, and is provided at a left side portion of a left console portion 17L provided leftward of the operator's seat 6.

The manipulating levers 13L and 13R are operation members for operating the machine body 2 and the working device 4, and are provided at the left console portion 17L provided leftward of the operator's seat 6 and a right console portion 17R provided rightward of the operator's seat 6, respectively. The dozer lever 14 is an operation member for operating the dozer device 7, and is provided rightward and rearward of the manipulating lever (right manipulating lever) 13R at the right console portion 17R.

The operation switch 15 includes a plurality of operation switches 15 that are operation members for operating various devices provided in the working machine 1 and are provided rearward of the dozer lever 14 at the right console portion 17R. The armrest 16 is a member on which an elbow and the like of the operator seated on the operator's seat 6 is placed, and is provided rearward of each of the manipulating levers 13L and 13R at the left and right console portions 17L and 17R.

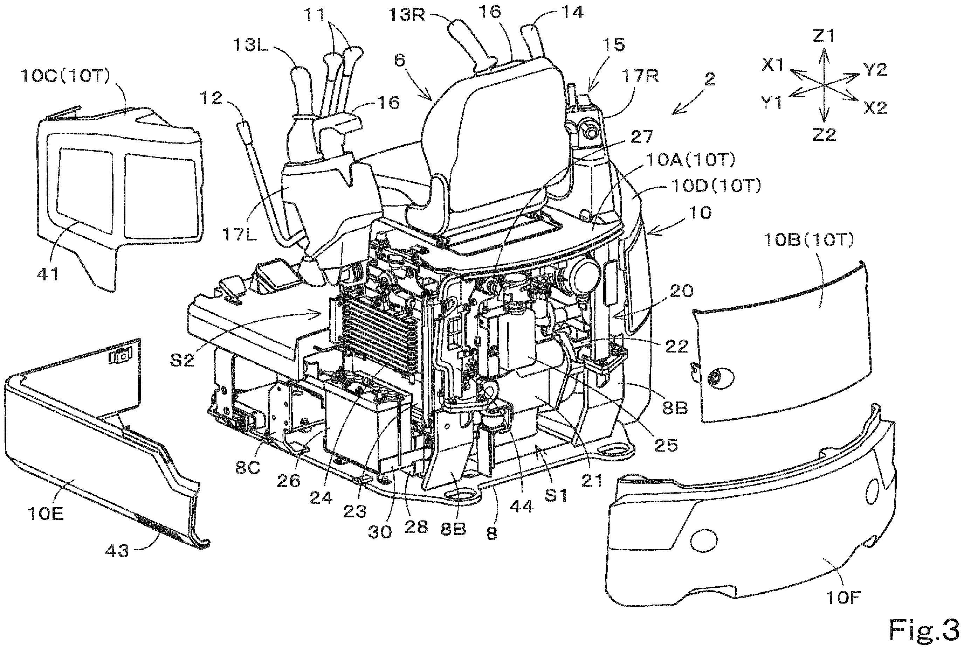

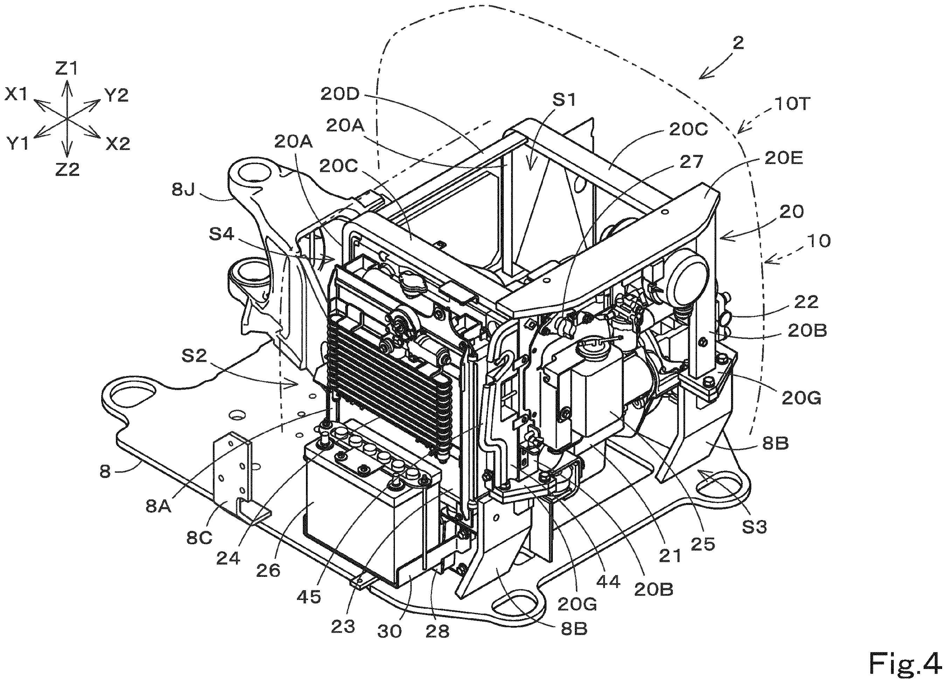

As illustrated in FIGS. 3 and 4, a support frame 20 is provided inside the machine body 2. Additionally, devices such as a prime mover 21, a hydraulic pump 22, a radiator 23, an oil cooler 24, a reserve tank 25, a battery 26, an isolator 27, and a controller 28 are mounted on the machine body 2. Note that the outer cover (cover body) 10 defining the outer shell of the machine body 2 includes a hood 10T that covers the prime mover 21. The support frame 20 supports the hood 10T.

The prime mover 21 of the present embodiment is a diesel engine. As illustrated in FIGS. 1 and 3, the prime mover 21 is disposed in a space (prime mover chamber) S1 located below the operator's seat 6 and inside the support frame 20. Note that the prime mover 21 is not limited to the diesel engine, and may be a gasoline engine, an electric motor, or a hybrid type prime mover including an engine and an electric motor.

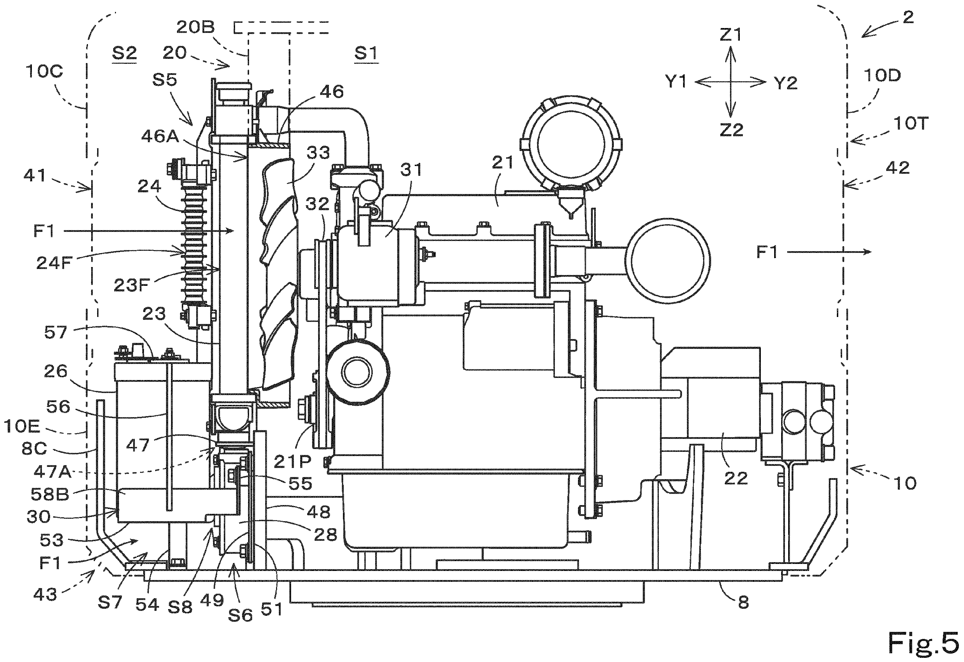

The hydraulic pump 22 is a device that is driven with power of the prime mover 21 and supplies a hydraulic fluid (pressure fluid) to hydraulic actuators such as hydraulic motors or hydraulic cylinders (swing cylinder, dozer cylinder, boom cylinder C1, arm cylinder C2, bucket cylinder C3) provided in the working machine 1. As illustrated in FIGS. 4 and 5, the hydraulic pump 22 is connected to a right side portion of the prime mover 21.

The radiator 23 is a cooler that cools a coolant that is circulated and supplied to the prime mover 21. The oil cooler 24 is a cooler that cools a hydraulic fluid that is supplied to the hydraulic actuators. The radiator 23 and the oil cooler 24 are both disposed in a space S2 located leftward of the support frame 20 in the outer cover 10.

The reserve tank 25 is a device that stores the coolant. The reserve tank 25 is disposed in a space S3 located rearward of the support frame 20 in the outer cover 10. The battery 26 is a storage battery that supplies electric power to electrical components including a work lamp, a display, and meters (not illustrated), and the controller 28 mounted on the working machine 1.

The battery 26 is disposed in the left space S2 of the support frame 20. The battery 26 is attached to an upper portion of the turning base plate 8 via a battery bracket 30. An attachment structure of the battery 26 will be described later.

The isolator 27 is a device that supplies electricity generated by an alternator 31 to the battery 26. The isolator 27 is disposed in the rear space S3 of the support frame 20.

The controller 28 is a device (electronic control unit, ECU) that controls actions of various devices (some or all of devices such as the prime mover 21, the hydraulic pump 22, a hydraulic control valve, a cooling device, an attachment, a display, an operation device, an illumination device, a blower, an air conditioner, a communication device, an imaging device, an alarm device, and various sensors) mounted on the working machine 1. The controller 28 is disposed in the left space S2 of the support frame 20.

As illustrated in FIG. 5, the alternator 31 is provided at a rear portion of the prime mover 21. The alternator 31 is coupled to a drive shaft 21P of the prime mover 21 via a power transmission belt 32, and is rotationally driven with rotational power of the prime mover 21 to generate electricity to be stored in the battery 26.

A cooling fan 33 is provided at a left side portion of the prime mover 21. The cooling fan 33 is coupled to the drive shaft 21P of the prime mover 21 via the power transmission belt 32, and is rotationally driven with the rotational power of the prime mover 21 to generate cooling air F1 for cooling the prime mover 21 inside the machine body 2.

As illustrated in FIGS. 2 and 3, the outer cover 10 includes a first cover body 10A disposed in the upper portion of the machine body 2 and lower than the operator's seat 6, a second cover body 10B disposed in an upper rear portion of the machine body 2, a third cover body 10C disposed in an upper left side portion of the machine body 2, a fourth cover body 10D disposed in an upper right side portion of the machine body 2, a fifth cover body 10E disposed in a lower left side portion of the machine body 2, and the weight 10F disposed in a lower rear portion of the machine body 2. Further, although not illustrated, the outer cover 10 includes a sixth cover body disposed in a lower right side portion of the machine body 2 and a seventh cover body disposed in the front portion of the machine body 2.

The hood 10T that covers the prime mover 21 includes the first cover body 10A, the second cover body 10B, the third cover body 10C, and the fourth cover body 10D. The first cover body 10A, the second cover body 10B, the third cover body 10C, and the fourth cover body 10D are supported by the support frame 20 (see FIG. 4).

As illustrated in FIGS. 1 and 3, the first cover body 10A is a cover member that covers the front and upper side of the prime mover 21, and is fixed to left and right front pillar portions 20A and a rear upper frame portion 20E (see FIG. 4) of the support frame 20 by bolts or the like.

The second cover body 10B is a cover member that covers the rear of the prime mover 21 (an upper region of the rear space S3 of the support frame 20), and a right side edge portion of the second cover body 10B is coupled to and supported by a right rear pillar portion 20B (see FIG. 4) of the support frame 20 by a hinge mechanism. That is, the second cover body 10B is pivotally coupled to the right rear pillar portion 20B of the support frame 20 so as to be swingable about a vertical axis (an axis extending in the up-down direction). The isolator 27 and the reserve tank 25 are disposed inward (forward) of the second cover body 10B. Thus, a worker can access the isolator 27, the reserve tank 25, the prime mover 21, and the like from the rear of the machine body 2 by swinging the second cover body 10B outward (rearward) of the machine body 2 to open the second cover body 10B.

The third cover body 10C is a cover member that covers the left of the prime mover 21 (an upper region of the left space S2 of the support frame 20), and a front edge portion of the third cover body 10C is coupled to and supported by the left front pillar portion 20A (see FIG. 4) of the support frame 20 by a hinge mechanism. That is, the third cover body 10C is pivotally coupled to the left front pillar portion 20A of the support frame 20 so as to be swingable about a vertical axis (an axis extending in the up-down direction). The radiator 23 and the oil cooler 24 are disposed inward (rightward) of the third cover body 10C. The battery 26 is disposed inward and downward (rightward and downward) of the third cover body 10C. Thus, the worker can access the radiator 23, the oil cooler 24, the battery 26, and the like from the left of the machine body 2 by swinging the third cover body 10C outward (leftward) of the machine body 2 to open the third cover body 10C.

The third cover body 10C has a first outside air inlet 41. The first outside air inlet 41 is an air intake for taking outside air into the machine body 2. The first outside air inlet 41 is covered with a member having air permeability, such as a perforated metal, an expanded metal, or a welded wire mesh.

The fourth cover body 10D is a cover member that covers the right of the prime mover 21, and is fixed to a side surface cover 10R (see FIG. 1) that is vertically provided forward and rightward of the operator's seat 6 (rightward of the feet of the worker seated on the operator's seat 6) in the upper portion of the machine body 2 by a bolt or the like.

As illustrated in FIG. 5, the fourth cover body 10D has an air outlet 42. The air outlet 42 discharges the outside air (cooling air F1) taken into the machine body 2 to the outside. The air outlet 42 is covered with a member having air permeability, such as a perforated metal, an expanded metal, or a welded wire mesh, similarly to the first outside air inlet 41 of the third cover body 10C.

As illustrated in FIGS. 1 and 3, the fifth cover body 10E is a cover member that covers the left of the prime mover 21 (a lower region of the left space S2 of the support frame 20), and is fixed to a bracket member 8C (see FIG. 5) vertically provided on a left side portion of the turning base plate 8 and a lower portion of the turning base plate 8 by bolts or the like. The battery 26 and the controller 28 are disposed inward (rightward) of the fifth cover body 10E.

The fifth cover body 10E has a second outside air inlet (outside air inlet) 43. The second outside air inlet 43 is an air intake for taking outside air into the machine body 2. The second outside air inlet 43 includes a plurality of slits. Note that the second outside air inlet 43 is not limited to the slits, and may include a plurality of small holes, or may be an opening covered with a member having air permeability, such as a perforated metal, an expanded metal, or a welded wire mesh, similarly to the first outside air inlet 41 of the third cover body 10C.

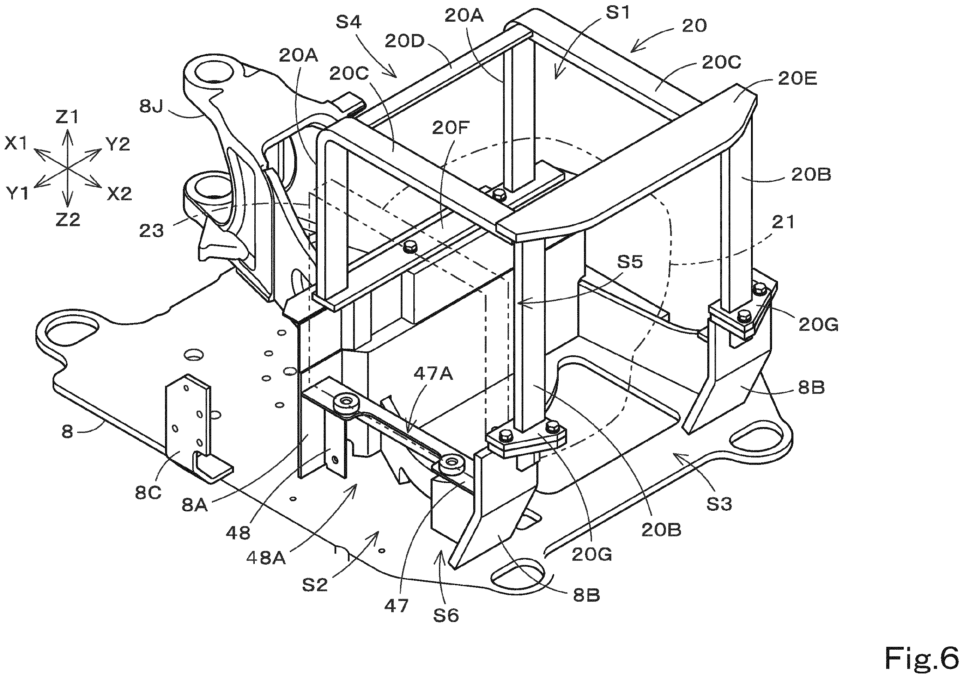

As illustrated in FIG. 6, the support frame 20 is vertically provided on the turning base plate 8. The support frame 20 includes at least one front pillar portion 20A, at least one rear pillar portion 20B, at least one upper side frame portion 20C, a front upper frame portion 20D, a rear upper frame portion 20E, a front attachment plate 20F, and at least one rear attachment plate 20G.

The front pillar portion 20A includes a pair of front pillar portions 20A disposed forward of the prime mover 21 so as to extend in the up-down direction and to be spaced apart from each other in the left-right direction. The rear pillar portion 20B includes a pair of rear pillar portions 20B disposed rearward of the prime mover 21 so as to extend in the up-down direction and to be spaced apart from each other in the left-right direction.

The upper side frame portion 20C is formed to extend rearward from each of upper portions of the left and right front pillar portions 20A. The upper side frame portions 20C are formed integrally with the front pillar portions 20A. Rear portions of the left and right upper side frame portions 20C are coupled and fixed to upper portions of the rear pillar portions 20B disposed rearward of the rear portions of the upper side frame portions 20C.

The front upper frame portion 20D is provided across the upper portions of the left and right front pillar portions 20A, and couples the upper portions to each other and couples front portions of the left and right upper side frame portions 20C to each other. The rear upper frame portion 20E is provided across the upper portions of the left and right rear pillar portions 20B, and couples the upper portions to each other and couples the rear portions of the left and right upper side frame portions 20C to each other.

The front attachment plate 20F is provided across lower portions of the left and right front pillar portions 20A and couples the lower portions to each other. The front attachment plate 20F is fixed to an upper portion of a partition wall 8A vertically provided on the turning base plate 8, by a bolt or the like. That is, the front pillar portions 20A are vertically provided on the upper portion of the partition wall 8A. The partition wall 8A is vertically provided forward of the prime mover 21 on the turning base plate 8, and provides partition between the prime mover chamber S1 and a space S4 located forward of the support frame 20.

The rear attachment plate 20G is fixed to each of upper portions of a pair of left and right bracket members 8B vertically provided on the turning base plate 8, by a bolt or the like. That is, the rear pillar portions 20B are vertically provided on the upper portions of the pair of bracket members 8B.

Thus, the support frame 20 is a structure body including the four pillar portions 20A and 20B standing on the upper portion of the turning base plate 8 and the plurality of frame portions 20C, 20D, and 20E connecting the pillar portions 20A and 20B substantially horizontally. Note that the support frame 20 is not limited to the configuration of the present embodiment, and can be appropriately changed in accordance with the arrangement, size, and the like of each device mounted on the machine body 2.

As illustrated in FIGS. 4, 7, and 8, a partition member 44 is provided at the left rear pillar portion 20B of the support frame 20. The partition member 44 is provided so as to extend from the upper portion to a lower portion of the left rear pillar portion 20B and to protrude leftward from the left rear pillar portion 20B, and provides partition between the left space S2 and the rear space S3 of the support frame 20.

A seal member 45 is provided at an outer side edge portion of the partition member 44. The seal member 45 is in contact with an inner side surface of the outer cover 10 (third cover body 10C). Accordingly, the partition member 44 and the seal member 45 prevent or reduce a flow of the outside air (cooling air F1) taken into the machine body 2 by the cooling fan 33 from the left space S2 to the rear space S3 of the support frame 20.

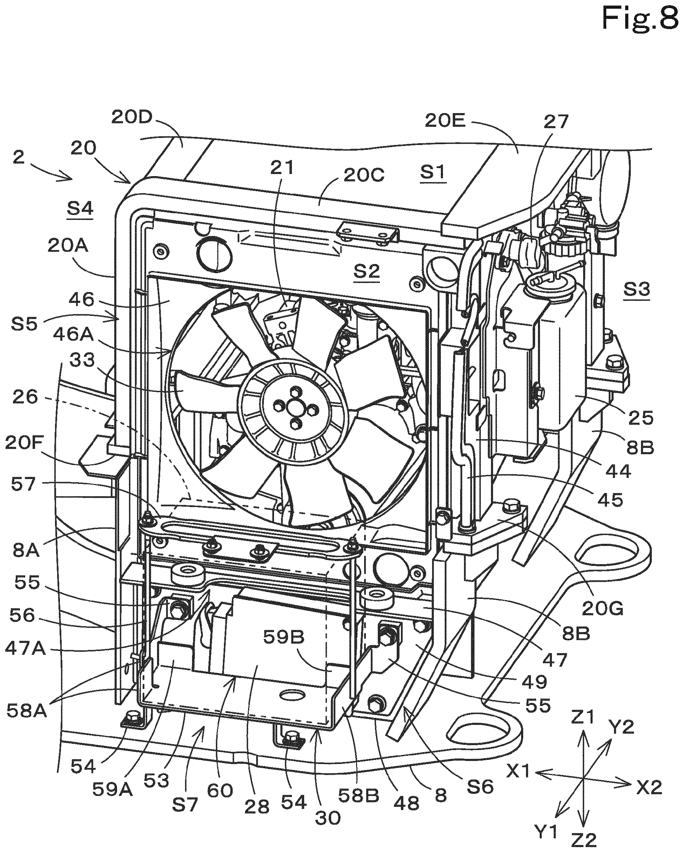

As illustrated in FIGS. 5 and 8, a shroud 46 is provided in a left side portion of the support frame 20. The shroud 46 is an air guide member that guides the outside air (cooling air F1) taken into the machine body 2 by the cooling fan 33 so as to efficiently flow from the left space S2 of the support frame 20 to the prime mover chamber S1. The shroud 46 is fitted into a gap surrounded by the left front pillar portion 20A, the left rear pillar portion 20B, and the left upper side frame portion 20C of the support frame 20, and provides partition between the left space S2 of the support frame 20 and the prime mover chamber S1.

The shroud 46 has an air-blowing opening 46A at the center. The air-blowing opening 46A is a substantially circular through hole, and causes the left space S2 of the support frame 20 to communicate with the prime mover chamber S1. The cooling fan 33 is disposed inside the air-blowing opening 46A. That is, the shroud 46 is provided so as to surround the outer periphery of the cooling fan 33.

As illustrated in FIG. 5, the radiator 23 has a ventilation surface portion 23F on which the cooling air F1 hits. The radiator 23 is disposed leftward of the cooling fan 33 in a posture in which the ventilation surface portion 23F is directed in the left-right direction, and covers the air-blowing opening 46A of the shroud 46 from the left. The oil cooler 24 has a ventilation surface portion 24F on which the cooling air F1 hits. The oil cooler 24 is disposed leftward of the radiator 23 in a posture in which the ventilation surface portion 24F is directed in the left-right direction. That is, the radiator 23 and the oil cooler 24 are arranged in the left-right direction in the left space S2 of the support frame 20 in a posture in which the ventilation surface portions 23F and 24F are directed in the left-right direction. The first outside air inlet 41 provided in the third cover body 10C is provided at a position located leftward of and facing the oil cooler 24, that is, a position overlapping the ventilation surface portions 23F and 24F when viewed in a flow direction of the cooling air F1, and causes a space in which the oil cooler 24 and the radiator 23 are disposed to communicate with an external space of the third cover body 10C.

Thus, when the cooling fan 33 is actuated, outside air (cooling air F1) is taken into the left space S2 of the support frame 20 through the first outside air inlet 41, and is guided to the air-blowing opening 46A of the shroud 46 through the ventilation surface portion 24F of the oil cooler 24 and the ventilation surface portion 23F of the radiator 23, and is blown to the prime mover 21. Specifically, tubes through which cooling target fluids (coolant, hydraulic fluid) flow and fins attached to the tubes are disposed at the ventilation surface portions 23F and 24F of the radiator 23 and the oil cooler 24, and the cooling air F1 is guided to the air-blowing opening 46A of the shroud 46 through gaps between the tubes and the fins and is blown to the prime mover chamber S 1. Accordingly, the cooling air F1 passing through the ventilation surface portions 23F and 24F cools the cooling target fluids (coolant, hydraulic fluid) of the oil cooler 24 and the radiator 23, and the cooling air F1 guided to the prime mover chamber S1 and passing through the periphery of the prime mover 21 cools the prime mover 21 and the like. In other words, the radiator 23 is disposed upstream of the prime mover 21 in the flow direction of the cooling air F1. Thus, the left space S2 of the support frame 20 includes a first cooling air passage extending from the first outside air inlet 41 to the prime mover chamber S1 through an arrangement space S5 of the radiator 23.

As illustrated in FIGS. 5, 6, and 8, an intermediate frame 47 and a left attachment plate 48 are provided leftward of and lower than the support frame 20. The intermediate frame 47 is provided to extend substantially parallel to the turning base plate 8 at a position located lower than the shroud 46 and between the partition wall 8A and the left bracket member 8B, and partitions a space located outward (leftward) of the prime mover chamber S1 into upper and lower spaces.

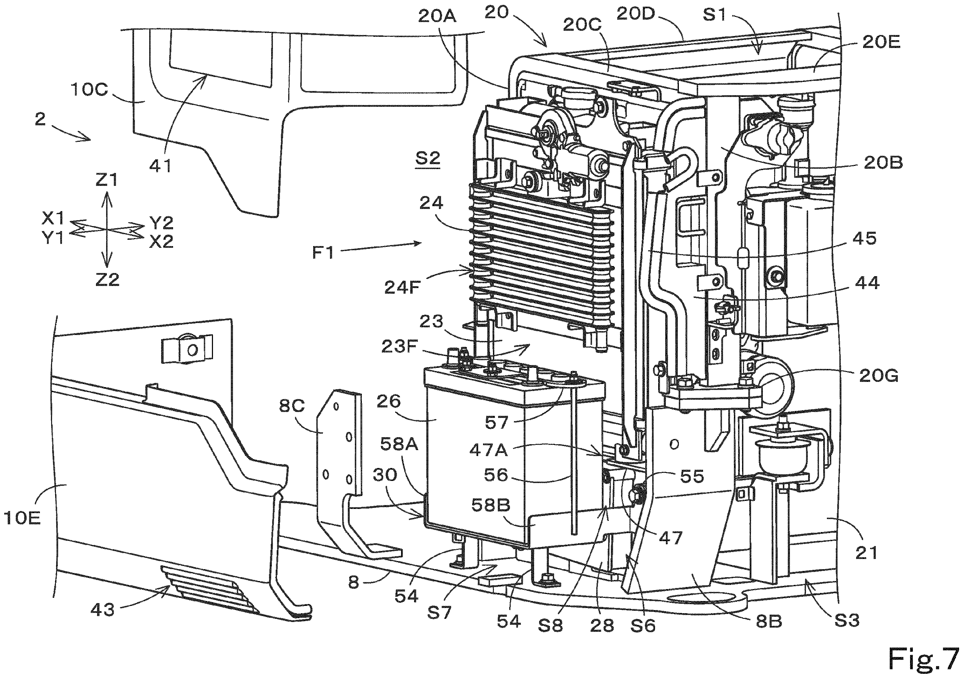

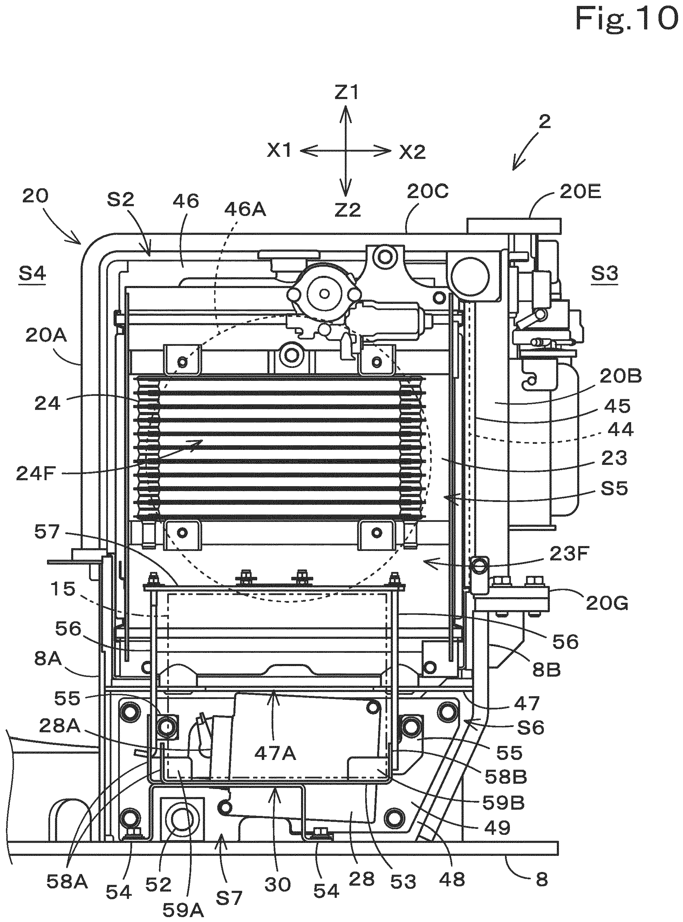

The intermediate frame 47 supports the radiator 23 from below on the left of the prime mover 21. The radiator 23 is attached to an upper portion of the intermediate frame 47 by a bolt or the like. The controller 28 is disposed below the intermediate frame 47, that is, below the radiator 23 (see FIGS. 5 and 8). Specifically, as illustrated in FIGS. 5 and 7, the controller 28 is disposed outside the ventilation surface portion 23F of the radiator 23 so as not to overlap the ventilation surface portion 23F of the radiator 23 when viewed in the flow direction of the cooling air F1 flowing from the left of the machine body 2 toward the ventilation surface portion 23F of the radiator 23 (see FIG. 10).

As illustrated in FIGS. 5, 6, and 8, the intermediate frame 47 has a communication opening (second communication opening) 47A. The communication opening 47A is a substantially quadrangular notch formed along a side edge portion of the intermediate frame 47, and causes the space S5 above the intermediate frame 47 in which the radiator 23 is disposed to communicate with a space S6 below the intermediate frame 47 in which the controller 28 is disposed.

The communication opening 47A is provided above the controller 28. The communication opening 47A is provided at a position facing the controller 28 from above. The communication opening 47A is formed to have a larger opening area in the front-rear direction than the dimension of the controller 28 in the front-rear direction. Note that the communication opening 47A is not limited to the notch, and may be a hole having a substantially quadrangular shape or a substantially circular shape that vertically penetrates the intermediate frame 47. Alternatively, the intermediate frame 47 may include a pair of plate bodies arranged to be spaced apart from each other in the front-rear direction, and the communication opening 47A may be a spaced portion defined between the plate bodies.

The left attachment plate 48 is vertically provided leftward of the prime mover 21 on the upper portion of the turning base plate 8. The left attachment plate 48 extends along a lower surface portion of the intermediate frame 47 between the partition wall 8A and the left bracket member 8B, and supports the intermediate frame 47 from below.

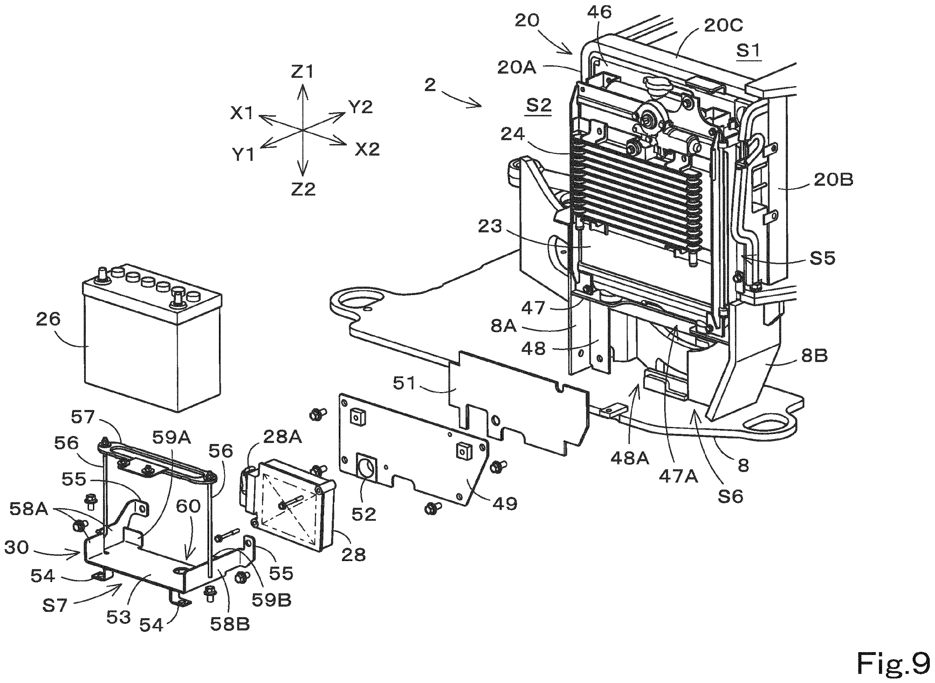

As illustrated in FIGS. 6 and 9, the left attachment plate 48 is provided with an opening 48A. The opening 48A causes the prime mover chamber S1 to communicate with an arrangement space S6 of the controller 28 (a space below the intermediate frame 47).

A shielding plate 49 is provided leftward of the left attachment plate 48 (outside the prime mover chamber S1). The shielding plate 49 is a substantially flat plate-shaped plate body having a size capable of shielding the entire opening 48A, and is fixed to a left side surface of the left attachment plate 48 (outside the prime mover chamber S1) by a bolt or the like to cover the opening 48A from the outside of the prime mover chamber S1. The controller 28 is fixed to a left side surface of the shielding plate 49 (outside the prime mover chamber S1) by a bolt or the like. Thus, the shielding plate 49 provides partition between the prime mover chamber S1 in which the prime mover 21 is disposed and the space S6 in which the controller 28 is disposed, and prevents or reduces a flow of the cooling air F1 (hot air) after cooling the prime mover 21 through heat exchange, remaining heat in the prime mover chamber S1, and the like to the arrangement space S6 of the controller 28.

Note that, as illustrated in FIG. 10, a connecting portion 28A for a harness is provided at a front portion of the controller 28, and the controller 28 is attached to the shielding plate 49 in an inclined posture in which the connecting portion 28A is directed forward and upward. With this configuration, connecting workability of the harness is improved as compared with a case where the controller 28 is attached to the shielding plate 49 in a posture in which the connecting portion 28A is directed horizontally forward.

As illustrated in FIG. 9, a heat insulating member 51 is provided on a right side surface of the shielding plate 49 (inside the prime mover chamber S1). The heat insulating member 51 covers substantially the entire right side surface of the shielding plate 49 (inside the prime mover chamber S 1), and prevents or reduces transfer of heat of the cooling air F1 after cooling the prime mover 21 through heat exchange, remaining heat in the prime mover chamber S1, radiant heat from the prime mover 21, and the like to the controller 28.

The shielding plate 49 includes a grommet 52. The grommet 52 is a member through which the harness that is connected to the connecting portion 28A of the controller 28 passes, and that causes the left space S2 of the support frame 20 to communicate with the prime mover chamber S1 through the opening 48A of the left attachment plate 48.

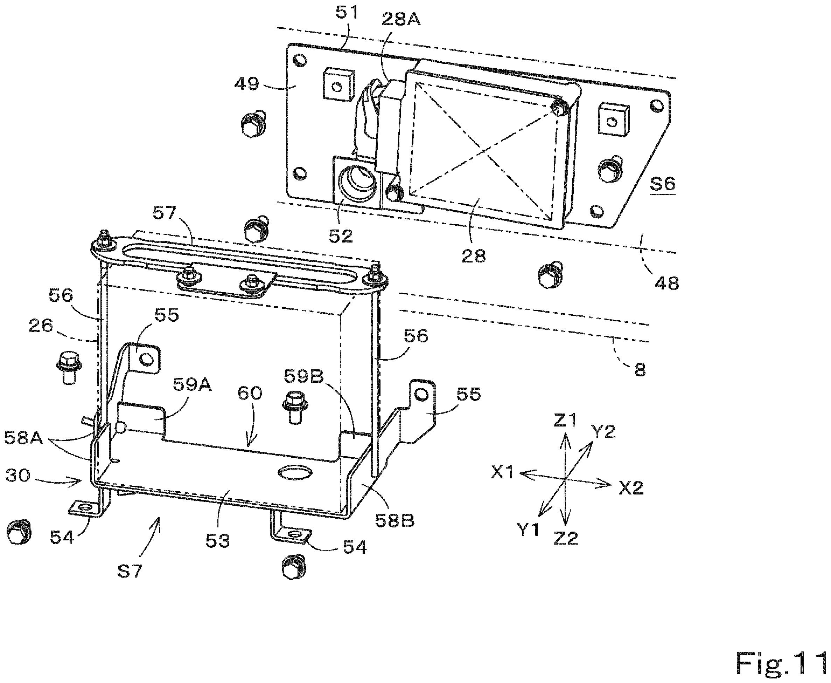

As illustrated in FIGS. 8 to 11, the battery bracket 30 is provided leftward of the shielding plate 49 (outside the prime mover chamber S1). The battery bracket 30 is attached to the shielding plate 49 and the turning base plate 8, and supports the battery 26 in the left space S2 of the support frame 20.

The battery bracket 30 includes a base plate 53, a lower portion attachment piece 54, at least one side portion attachment piece 55, at least one pillar 56, and a pressing plate 57. The battery 26 is placed on an upper portion of the base plate 53. As illustrated in FIGS. 8 to 10, the base plate 53 has a first flange 58A, a second flange 58B, a third flange 59A, a fourth flange 59B, and a communication opening (first communication opening) 60. The base plate 53 is formed in a substantially flat plate shape larger than a lower surface portion of the battery 26, and supports the battery 26 from below. The base plate 53 is disposed substantially parallel to the turning base plate 8, and a second space S7 (described later) is defined by the base plate 53 and the turning base plate 8.

The first flange 58A is vertically provided along a front edge portion of the base plate 53, and supports the battery 26 from the front. The second flange 58B is vertically provided along a rear edge portion of the base plate 53, and supports the battery 26 from the rear. The third flange 59A and the fourth flange 59B are vertically provided along a right edge portion (an edge portion near the shielding plate 49) of the base plate 53, and support the battery 26 from the right (from the shielding plate 49 side).

The lower portion attachment piece 54 is provided to protrude downward from a lower surface portion of the base plate 53. A lower end portion of the lower portion attachment piece 54 abuts on an upper surface of the turning base plate 8 and is fixed by a bolt or the like. Thus, the lower portion attachment piece 54 extends from the base plate 53 to the turning base plate 8, and supports the base plate 53 above the turning base plate 8. Accordingly, an outside air introduction passage S7 that guides the outside air (cooling air F1) taken into the machine body 2 to the arrangement space S6 of the controller 28 is defined between the base plate 53 and the turning base plate 8. That is, the battery 26 is disposed above the turning base plate 8 with a predetermined second space (outside air introduction passage) S7, through which the cooling air F1 can flow, interposed with respect to the turning base plate 8.

The side portion attachment piece 55 is provided to protrude rightward from each of a right side portion of the first flange 58A and a right side portion of the second flange 58B, beyond the right edge portion of the base plate 53. A right end portion of the side portion attachment piece 55 abuts on the left side surface of the shielding plate 49 and is fixed by a bolt or the like. Thus, the side portion attachment piece 55 extends from the base plate 53 to the shielding plate 49 (see FIG. 5), and supports the base plate 53 with a space provided leftward of the shielding plate 49. Accordingly, the battery 26 is disposed at a position facing the controller 28 with a predetermined first space S8, through which the cooling air F1 can flow, interposed therebetween.

The pillar 56 is vertically provided at each of the first flange 58A and the second flange 58B. That is, the pillar 56 is provided to extend upward from each of a front portion and a rear portion of the base plate 53. A lower end of the pillar 56 near the first flange 58A is bent in a substantially L shape, and is detachably engaged with and held by the first flange 58A. A lower end of the pillar 56 near the second flange 58B is fixed to the second flange 58B.

The pressing plate 57 is a plate member long in the front-rear direction and is provided to extend between upper ends of the two front and rear pillars 56. That is, the pressing plate 57 is supported from below by the two front and rear pillars 56. The pressing plate 57 is fixed to the upper ends of the two front and rear pillars 56 by nuts or the like in a state of abutting on an upper portion of the battery 26.

As illustrated in FIGS. 8, 9, and 11, the communication opening 60 is a substantially quadrangular notch formed along the right edge portion (the edge portion near the shielding plate 49) of the base plate 53, and is provided between the third flange 59A and the fourth flange 59B.

The communication opening 60 is provided leftward of the controller 28, and expands the gap between the base plate 53 and the controller 28 in the left-right direction. The communication opening 60 is formed to have a larger opening area in the front-rear direction than the dimension of the controller 28 in the front-rear direction. Thus, the battery bracket 30 has the communication opening 60 that allows the cooling air F1 to flow from the outside air introduction passage S7 to the first space S8. Note that the communication opening 60 is not limited to the notch, and may be a substantially quadrangular through hole or a substantially circular through hole formed through the base plate 53. Also, a plurality of communication openings 60 may be provided in the base plate 53.

As illustrated in FIG. 5, the battery bracket 30 is provided between the left attachment plate 48 and the fifth cover body 10E, and supports the battery 26 on the left of the radiator 23. The controller 28 is disposed rightward of the battery 26 and below the radiator 23. Thus, the radiator 23 and the controller 28 are arranged in the up-down direction in the left space S2 of the support frame 20. Also, the battery 26 and the controller 28 are arranged in the left-right direction in the left space S2 of the support frame 20. The second outside air inlet 43 provided in the fifth cover body 10E is provided lower than the first outside air inlet 41. The second outside air inlet 43 is provided at a position located leftward of and facing the outside air introduction passage S7 provided below the battery 26, and causes the outside air introduction passage S7 to communicate with the external space of the fifth cover body 10E.

The outside air introduction passage S7 communicates with the first space S8 between the battery 26 and the controller 28 in a downstream area of the outside air introduction passage S7 in the flow direction of the cooling air F1. The controller 28 is disposed in the downstream area of the outside air introduction passage S7 in the left space S2 of the support frame 20.

Thus, when the cooling fan 33 is actuated, the outside air (cooling air F1) is taken into the left space S2 of the support frame 20 through the second outside air inlet 43, and is guided to the arrangement space S6 of the controller 28 through the outside air introduction passage S7 below the battery 26. Furthermore, the outside air that has risen in the first space S8 between the battery 26 and the controller 28 is guided to the air-blowing opening 46A of the shroud 46 through the arrangement space S5 of the radiator 23, and is blown to the prime mover 21. Accordingly, the battery 26, the controller 28, the radiator 23, the prime mover 21, and the like are cooled. In other words, the controller 28 is disposed upstream of the prime mover 21 in the flow direction of the cooling air F1. Thus, the left space S2 of the support frame 20 includes a second cooling air passage extending from the second outside air inlet 43 to the prime mover chamber S1 through the arrangement space S6 of the controller 28.

Note that, in the above-described embodiment, the radiator (cooler) 23 is disposed leftward of the prime mover 21. However, the radiator 23 may be disposed rightward of the prime mover 21, or may be disposed forward or rearward of the prime mover 21, as long as the radiator 23 is disposed upstream of the prime mover 21 in the flow direction of the cooling air F1.

Also, in the above-described embodiment, the controller 28 is disposed below the radiator (cooler) 23. However, the controller 28 may be disposed above the radiator 23, forward or rearward of the radiator 23, or leftward or rightward of the radiator 23, as long as the controller 28 is disposed upstream of the radiator 23 in the flow direction of the cooling air F1.

The present invention provides a working machine 1 described in the following items.

(Item 1) A working machine 1 comprising: a machine body 2; a prime mover 21 mounted on the machine body 2; a cooling fan 33 to generate cooling air F1 for cooling the prime mover 21; a cooler 23 having a ventilation surface portion 23F on which the cooling air F1 hits, to cool a coolant to be circulated and supplied to the prime mover 21; and a controller 28), wherein the cooler 23 and the controller 28 are disposed upstream of the prime mover 21 in a flow direction of the cooling air F1, and the controller 28 is disposed at a position not overlapping the ventilation surface portion 23F when viewed in the flow direction.

With the working machine 1 according to Item 1, the cooling air F1 before cooling the prime mover 21 is guided to the ventilation surface portion 23F of the cooler 23 without being blocked by the controller 28, and hence both the cooler 23 and the controller 28 can be efficiently cooled.

(Item 2) The working machine 1 according to Item 1, wherein the controller 28 is disposed below the cooler 23.

With the working machine 1 according to Item 2, even when the cooling fan 33 is stopped, heat released from the cooler 23 is unlikely to flow to the space S6 in which the controller 28 is disposed, and hence the cooling efficiency of the controller 28 is further improved.

(Item 3) The working machine 1 according to Item 2, comprising: a shielding plate 49 to provide partition between a prime mover chamber S1 in which the prime mover 21 is disposed and a space S6 in which the controller 28 is disposed, wherein the controller 28 is disposed at a position facing a surface of the shielding plate 49 opposite to the prime mover chamber S 1.

With the working machine 1 according to Item 3, a flow of the cooling air F1 after cooling the prime mover 21 through heat exchange, remaining heat in the prime mover chamber S1, radiant heat from the prime mover 21, and the like to the space S6, in which the controller 28 is disposed, can be prevented or reduced. Hence the cooling efficiency of the controller 28 is further improved.

(Item 4) The working machine 1 according to Item 3, comprising a heat insulating member 51 to cover a surface of the shielding plate 49 near the prime mover chamber S 1.

With the working machine 1 according to Item 4, transfer of heat of the cooling air F1 after cooling the prime mover 21 through heat exchange, remaining heat in the prime mover chamber S1, radiant heat from the prime mover 21, and the like to the controller 28 can be more effectively prevented or reduced. Hence the cooling efficiency of the controller 28 is further improved.

(Item 5) The working machine 1 according to Item 3 or 4, comprising: a battery 26 to supply electric power to an electrical component including the controller 28 mounted on the working machine 1, wherein the battery 26 is disposed at a position facing the controller 28 with a first space S8, through which the cooling air F1 is able to flow, interposed therebetween.

With the working machine 1 according to Item 5, the cooling air F1 can be reliably brought into contact with the controller 28 by the cooling air F1 being caused to flow through the first space S8 between the battery 26 and the controller 28. Hence the cooling efficiency of the controller 28 is further improved. Accordingly, the thermal load on the controller 28 can be further reduced.

(Item 6) The working machine 1 according to Item 5, wherein the battery 26 is disposed above a bottom portion base plate 8 of the machine body 2 with a second space S7, through which the cooling air F1 is able to flow, interposed with respect to the bottom portion base plate 8, and the second space S7 communicates with the first space S8 in a downstream area of the second space S7 in the flow direction of the cooling air F1.

With the working machine 1 according to Item 6, the cooling air F1 can be reliably guided to the first space S8 through the second space S7 between the bottom portion base plate 8 and the battery 26. Hence the cooling efficiency of the controller 28 is further improved. Accordingly, the thermal load on the controller 28 can be further reduced.

(Item 7) The working machine 1 according to Item 6, wherein a cover body 10 defining an outer shell of the machine body 2 includes a first outside air inlet 41 provided at a position overlapping the ventilation surface portion 23F when viewed in the flow direction, and a second outside air inlet 43 provided lower than the first outside air inlet 41 to cause the second space S7 to communicate with an external space of the cover body 10.

With the working machine 1 according to Item 7, the cooling air F1 can be reliably guided from the second outside air inlet 43 to the first space S8 through the second space S7. Hence the cooling efficiency of the controller 28 is further improved. Accordingly, the thermal load on the controller 28 can be further reduced.

(Item 8) The working machine 1 according to Item 6, comprising: a battery bracket 30 attached to the bottom portion base plate 8, to support the battery 26, wherein the battery bracket 30 includes a base plate 53 to support the battery 26 from below, and the second space S7 is defined by the base plate 53 and the bottom portion base plate 8.

With the working machine 1 according to Item 8, the outside air (cooling air F1) taken into the machine body 2 by the cooling fan 33 is rectified by passing through the second space S7 defined by the base plate 53 of the battery bracket 30 and the bottom portion base plate 8, and is guided to the first space S8 between the battery 26 and the controller 28. Hence the cooling efficiency of the controller 28 is further improved. Accordingly, the thermal load on the controller 28 can be further reduced.

(Item 9) The working machine 1 according to Item 8, wherein the base plate 53 has a first communication opening 60 to allow the cooling air F1 to flow from the second space S7 to the first space S8.

With the working machine 1 according to Item 9, the cooling air F1 can be reliably guided from the second space S7 to the first space S8 through the first communication opening 60 provided in the base plate 53 of the battery bracket 30. Hence the cooling efficiency of the controller 28 is further improved. Accordingly, the thermal load on the controller 28 can be further reduced.

(Item 10) The working machine 1 according to any one of Items 5 to 9, comprising: an intermediate frame 47 to support the cooler 23 from below, wherein the intermediate frame 47 has a second communication opening 47A to allow the cooling air F1 to flow from the first space S8 to a space S5 in which the cooler 23 is disposed.

With the working machine 1 according to Item 10, the flow of the cooling air F1 in the first space S8 is stabilized by the cooling air F1 being caused to flow from the first space S8 to the space S5, in which the cooler 23 is disposed, through the second communication opening 47A provided in the intermediate frame 47. Hence the cooling efficiency of the controller 28 is further improved. Accordingly, the thermal load on the controller 28 can be further reduced.

(Item 11) The working machine 1 according to Item 10, wherein the second communication opening 47A is provided above the controller 28.

With the working machine 1 according to Item 11, the cooling air F1 flowing to the space S5, in which the cooler 23 is disposed, through the first space S8 can be reliably brought into contact with the controller 28. Hence the cooling efficiency of the controller 28 is further improved. Accordingly, the thermal load on the controller 28 can be further reduced.

While example embodiments of the present invention have been described above, it is to be understood that variations and modifications will be apparent to those skilled in the art without departing from the scope and spirit of the present invention. The scope of the present invention, therefore, is to be determined solely by the following claims.

Also, in the above-described embodiment, the example has been described in which the present invention is applied to the working machine such as a backhoe. However, an application target of the present invention is not limited to the working machine such as a backhoe, and may be applied to a construction machine such as a wheel loader, a compact track loader, or a skid-steer loader, or may be applied to an agricultural machine such as a tractor, a combine, a rice transplanter, or a lawn mower.

## Claims

1. A working machine (1) comprising:
a machine body (2);
a prime mover (21) mounted on the machine body (2);
a cooling fan (33) to generate cooling air (F1) for cooling the prime mover (21);
a cooler (23) having a ventilation surface portion (23F) on which the cooling air (F1) hits, to cool a coolant to be circulated and supplied to the prime mover (21); and
a controller (28), wherein
the cooler (23) and the controller (28) are disposed upstream of the prime mover (21) in a flow direction of the cooling air (F1), and
the controller (28) is disposed at a position not overlapping the ventilation surface portion (23F) when viewed in the flow direction.

2. The working machine (1) according to claim 1, wherein the controller (28) is disposed below the cooler (23).

3. The working machine (1) according to claim 2, comprising:
a shielding plate (49) to provide partition between a prime mover chamber (S1) in which the prime mover (21) is disposed and a space (S6) in which the controller (28) is disposed, wherein
the controller (28) is disposed at a position facing a surface of the shielding plate (49) opposite to the prime mover chamber (S1).

4. The working machine (1) according to claim 3, comprising a heat insulating member (51) to cover a surface of the shielding plate (49) near the prime mover chamber (S 1).

5. The working machine (1) according to claim 3 or 4, comprising:
a battery (26) to supply electric power to an electrical component including the controller (28) mounted on the working machine (1), wherein
the battery (26) is disposed at a position facing the controller (28) with a first space (S8), through which the cooling air (F1) is able to flow, interposed therebetween.

6. The working machine (1) according to claim 5, wherein
the battery (26) is disposed above a bottom portion base plate (8) of the machine body (2) with a second space (S7), through which the cooling air (F1) is able to flow, interposed with respect to the bottom portion base plate (8), and
the second space (S7) communicates with the first space (S8) in a downstream area of the second space (S7) in the flow direction of the cooling air (F1).

7. The working machine (1) according to claim 6, wherein a cover body (10) defining an outer shell of the machine body (2) includes a first outside air inlet (41) provided at a position overlapping the ventilation surface portion (23F) when viewed in the flow direction, and a second outside air inlet (43) provided lower than the first outside air inlet (41) to cause the second space (S7) to communicate with an external space of the cover body (10).

8. The working machine (1) according to claim 6, comprising:
a battery bracket (30) attached to the bottom portion base plate (8), to support the battery (26), wherein
the battery bracket (30) includes a base plate (53) to support the battery (26) from below, and
the second space (S7) is defined by the base plate (53) and the bottom portion base plate (8).

9. The working machine (1) according to claim 8, wherein the base plate (53) has a first communication opening (60) to allow the cooling air (F1) to flow from the second space (S7) to the first space (S8).

10. The working machine (1) according to any one of claims 5 to 9, comprising:
an intermediate frame (47) to support the cooler (23) from below, wherein
the intermediate frame (47) has a second communication opening (47A) to allow the cooling air (F1) to flow from the first space (S8) to a space (S5) in which the cooler (23) is disposed.

11. The working machine (1) according to claim 10, wherein the second communication opening (47A) is provided above the controller (28).
